# EUROPÄISCHE PATENTSCHRIFT

(11) **EP 2 169 492 B1**
(45) Veröffentlichungstag und Bekanntmachung des Hinweises auf die Patenterteilung: **11.04.2012**
(21) Anmeldenummer: 08017133.3
(22) Anmeldetag: 29.09.2008
(51) Int. Cl.: G05B 19/416

(54) **Betriebsverfahren für eine Steuereinrichtung einer Maschine**
Operating method for a control device of a machine
Procédé de fonctionnement pour un dispositif de commande d'une machine

(43) Veröffentlichungstag der Anmeldung: 31.03.2010
(73) Patentinhaber: Siemens Aktiengesellschaft, 80333 München (DE)
(72) Erfinder: Denk, Joachim, Dr., 90419 Nürnberg (DE); Forster, Gerhard, 90592 Schwarzenbruck (DE); Krejtschi, Jürgen, Dr., 90478 Nürnberg (DE); Schäfers, Elmar, Dr., 90763 Fürth (DE)

(56) Entgegenhaltungen:
- EP-A- 1 946 917
- WO-A-2006/063945
- DE-A1-102005 040 263
- DE-A1-102006 028 094

## Beschreibung

Die vorliegende Erfindung betrifft ein Betriebsverfahren für eine Steuereinrichtung einer Maschine, wobei die Steuereinrichtung über eine Bedienerschnittstelle Charakteristika einer Verfahrbewegung eines Maschinenelements der Maschine entgegen nimmt, anhand der Charakteristika der Verfahrbewegung des Maschinenelements in Verbindung mit Limitierungen eines das Maschinenelement über ein nichtlineares Getriebe verstellenden Antriebs eine Verfahrfunktion für den Antrieb des Maschinenelements ermittelt, so dass der Antrieb das Maschinenelement entsprechend den Charakteristika der Verfahrbewegung des Maschinenelements verfährt, und den Antrieb entsprechend der ermittelten Verfahrfunktion ansteuert.

Die vorliegende Erfindung betrifft weiterhin ein Computerprogramm für eine Steuereinrichtung einer Maschine, wobei das Computerprogramm Maschinenbefehle umfasst, die von der Steuereinrichtung unmittelbar abarbeitbar sind, wobei die Abarbeitung der Maschinenbefehle durch die Steuereinrichtung bewirkt, dass die Steuereinrichtung ein derartiges Betriebsverfahren ausführt.

Die vorliegende Erfindung betrifft weiterhin eine Steuereinrichtung für eine Maschine, wobei die Steuereinrichtung derart ausgebildet ist, dass sie im Betrieb ein derartiges Betriebsverfahren ausführt.

Die oben genannten Gegenstände sind allgemein bekannt. Rein beispielhaft wird auf die DE 10 2006 028 094 A1 verwiesen.

Bei einer Vielzahl von Maschinen muss der Endeffektor bzw. das Werkzeug (allgemeiner: das Maschinenelement) mittels eines Antriebs von einer gegebenen anfänglichen Lage in eine neue Lage verfahren werden, die mit einer vorbestimmten Geschwindigkeit des Maschinenelements erreicht werden soll. Die Lage des Maschinenelements kann mit der Lage des Antriebs über eine nichtlineare Getriebefunktion verknüpft sein. Beispiele derartiger Maschinen sind Servopressen, Spritzgießmaschinen, fliegende Scheren, Bestückautomaten usw.. Die Verfahrzeit, die zum Verfahren des Maschinenelements von seiner anfänglichen Lage in seine Endlage benötigt wird, kann alternativ fest vorgegeben sein oder minimiert werden. In beiden Fällen muss jedoch sicher gestellt sein, dass bei den resultierenden Verfahrbewegungen die technischen Grenzen der Maschine, beispielsweise mögliche Maximalgeschwindigkeiten und Maximalmomente des Antriebs, eingehalten werden.

Im Stand der Technik ist es üblich, die Charakteristika der Verfahrbewegung des Maschinenelements als Funktion der Lage des Antriebs anzugeben, also beispielsweise als Funktion der Kolbenstellung im Falle der Ausbildung des Antriebs als Hydraulikzylindereinheit oder einer Lage eines lagegeregelten rotatorischen elektrischen Antriebs im Falle eines derartigen Antriebs. Diese Vorgehensweise wird beispielsweise auch beim Schließantrieb von Spritzgießmaschinen mit Kniehebelumlenkung und dem Stößelantrieb von Pressen mit Exzenter oder Schleppkurbel oder Gelenkgetriebe angewendet. Bei einer nichtlinearen Verknüpfung der Bewegung des Antriebs mit der Bewegung des Maschinenelements ist eine effektive Gestaltung der Bewegung des Maschinenelements unter gleichzeitiger Berücksichtigung der technischen Begrenzungen der Maschine und hier insbesondere des Antriebs nur schwer möglich. Das Einstellen prinzipiell einfacher Punkt-zu-Punkt-Bewegungen des Maschinenelements erfordert ein hohes Maß an Maschinenkenntnis und stellt in der weit überwiegenden Mehrzahl der Fälle einen langwierigen iterativen Prozess dar. Der Prozess wird insbesondere dadurch erschwert, dass auch die technischen Grenzen (Limitierungen) der Maschine und des Antriebs eingehalten werden müssen.

Aus der DE 10 2005 040 263 A1 ist ein Betriebsverfahren für eine Steuereinrichtung einer Maschine bekannt, wobei die Steuereinrichtung über eine Bedienerschnittstelle Charakteristika einer Verfahrbewegung eines Maschinenelements entgegennimmt. Die Steuereinrichtung ermittelt anhand der Charakteristika der Verfahrbewegung des Maschinenelements in Verbindung mit einer korrespondierenden nicht linearen Getriebefunktion eines nicht linearen Getriebes Verfahrwerte für einen das Maschinenelement über das nicht lineare Getriebe verstellenden Antrieb. Die Steuereinrichtung steuert den Antrieb entsprechend dem jeweils ermittelten Verfahrwert an, so dass der Antrieb das Maschinenelement entsprechend den Charakteristika der Verfahrbewegung des Maschinenelements verfährt.

Die Aufgabe der vorliegenden Erfindung besteht darin, Möglichkeiten zu schaffen, mittels derer auf einfache Weise eine optimale Verfahrfunktion für den Antrieb des Maschinenelements ermittelt werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß nimmt die Steuereinrichtung die Charakteristika der Verfahrbewegung des Maschinenelements als Funktion der Lage des Maschinenelements entgegen. Weiterhin berücksichtigt die Steuereinrichtung bei der Ermittlung der Verfahrfunktion für den Antrieb des Maschinenelements nicht nur die Charakteristika der Verfahrbewegung des Maschinenelements und die Limitierungen des Antriebs, sondern auch eine korrespondierende nichtlineare Getriebefunktion des nichtlinearen Getriebes.

Es ist möglich, dass die Steuereinrichtung die Limitierungen des Antriebs über die Bedienerschnittstelle entgegen nimmt. In der Regel sind jedoch die Limitierungen des Antriebs innerhalb der Steuereinrichtung remanent gespeichert. Im Einzelfall sind auch Kombinationen dieser beiden Vorgehensweisen möglich, beispielsweise das Speichern entgegen genommener Limitierungen, bis die gespeicherten Limitierungen durch neu vorgegebene Werte ersetzt werden.

In einer bevorzugten Ausgestaltung der vorliegenden Erfindung umfassen die Charakteristika der Verfahrbewegung des Maschinenelements für diskrete Lagen des Maschinenelements an diesen Lagen einzuhaltende Bedingungen mindestens einer zeitlichen Ableitung der Lage des Maschinenelements. Die einzuhaltenden Bedingungen können Limitierungen der zeitlichen Ableitung der Lage des Maschinenelements sein. Ebenso kann es sich um anzunehmende Werte der zeitlichen Ableitung der Lage des Maschinenelements handeln. Auch Mischformen sind möglich.

In einer besonders bevorzugten Ausgestaltung der vorliegenden Erfindung umfassen die Charakteristika der Verfahrbewegung des Maschinenelements
- eine Startlage, an der die Verfahrbewegung des Maschinenelements begonnen wird,
- eine Ziellage, an der die Verfahrbewegung des Maschinenelements beendet wird,
- eine Zwischenlage zwischen der Startlage und der Ziellage sowie
- einen an der Zwischenlage einzuhaltenden Wert für die erste zeitliche Ableitung der Lage des Maschinenelements.

Insbesondere in diesem Fall ergibt sich eine besonders effiziente Vorgabe der Verfahrbewegung des Maschinenelements, wenn die Charakteristika der Verfahrbewegung des Maschinenelements entweder keine weiteren Beschränkungen oder nur eine für das Verfahren des Maschinenelements einzuhaltende Verfahrzeit umfassen.

Auch im allgemeinen Fall, also auch dann, wenn die Charakteristika der Verfahrbewegung des Maschinenelements nicht notwendigerweise Startlage, Ziellage, Zwischenlage sowie den an der Zwischenlage einzuhaltenden Wert für die erste zeitliche Ableitung der Lage des Maschinenelements umfassen, ist es möglich, dass die einzuhaltenden Bedingungen eine für das Verfahren des Maschinenelements einzuhaltende Verfahrzeit umfassen.

Alternativ, also wenn eine einzuhaltende Verfahrzeit nicht vorgegeben wird, ist bevorzugt, dass die Steuereinrichtung die Verfahrfunktion für den Antrieb des Maschinenelements derart ermittelt, dass der Antrieb das Maschinenelement in einer möglichst kurzen Verfahrzeit verfährt.

Die Aufgabe wird weiterhin durch ein Computerprogramm mit den Merkmalen des Anspruchs 11 gelöst. Erfindungsgemäß bewirkt die Abarbeitung der Maschinenbefehle durch die Steuereinrichtung, dass die Steuereinrichtung ein erfindungsgemäßes Betriebsverfahren ausführt.

Das Computerprogramm kann auf einem mobilen Datenträger gespeichert sein. Alternativ kann es in der Steuereinrichtung gespeichert sein.

Schließlich wird die Aufgabe durch eine Steuereinrichtung mit den Merkmalen des Anspruchs 14 gelöst. Erfindungsgemäß ist die Steuereinrichtung derart ausgebildet, dass sie im Betrieb ein erfindungsgemäßes Betriebsverfahren ausführt.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: eine Maschine,
- FIG 2: eine erste Darstellung einer Getriebefunkti- on,
- FIG 3: eine zweite Darstellung einer Getriebefunk- tion,
- FIG 4 bis 6: je ein Ablaufdiagramm und
- FIG 7 und 8: je eine Verfahrbewegung eines Maschinenele- ments.

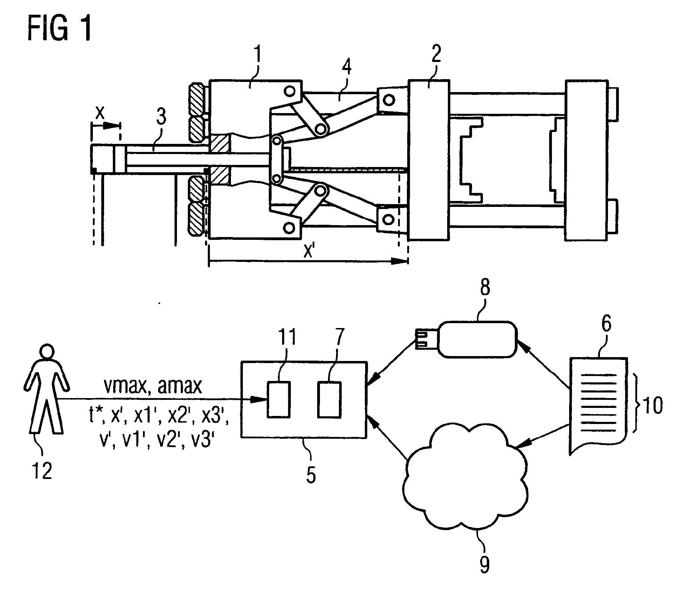

Gemäß FIG 1 weist eine Maschine unter anderem einen Grundkörper 1 auf. Am Grundkörper 1 ist ein Maschinenelement 2 bewegbar gelagert. Beispielsweise kann es sich bei dem Maschinenelement 2 um eine bewegliche Werkzeugplatte einer Spritzgießmaschine handeln. Diese in FIG 1 dargestellte Ausgestaltung ist jedoch rein beispielhaft. Die Maschine und das Maschinenelement 2 könnten auch andersartig ausgebildet sein. Beispielsweise könnte es sich bei der Maschine um eine Presse und bei dem beweglichen Maschinenelement 2 um einen Stößel handeln.

Das Maschinenelement 2 wird mittels eines Antriebs 3 angetrieben. Der Antrieb 3 ist gemäß FIG 1 als Hydraulikzylindereinheit ausgebildet. Auch diese Darstellung ist jedoch rein beispielhaft. Der Antrieb 3 könnte alternativ beispielsweise als andersartiger Linearantrieb (beispielsweise als elektrischer Linearmotor) oder als rotatorischer Antrieb (beispielsweise als rotatorischer Elektromotor oder als rotatorischer Hydromotor) ausgebildet sein.

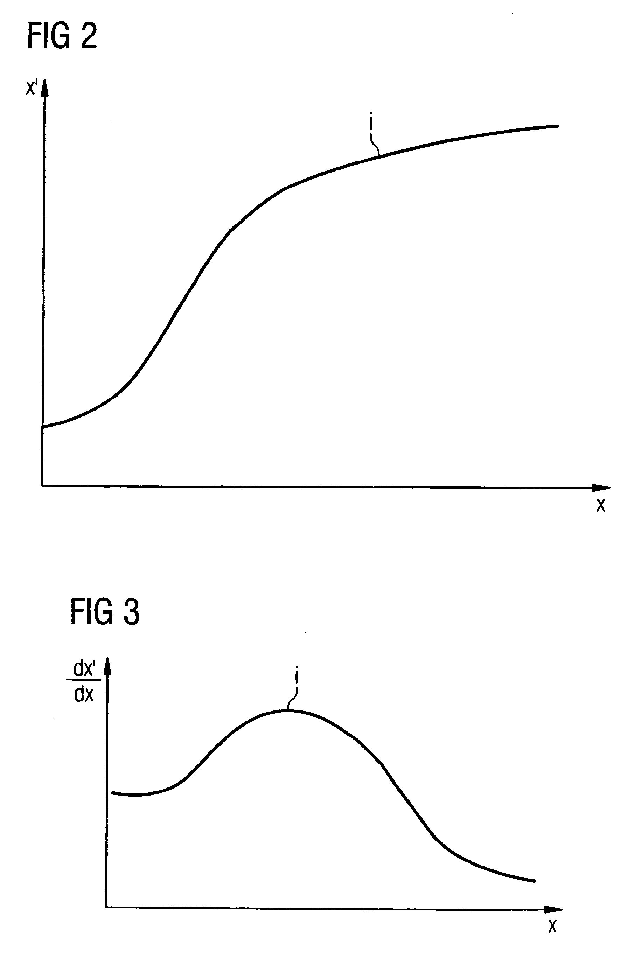

Der Antrieb 3 wirkt gemäß FIG 1 über ein Getriebe 4 auf das Maschinenelement 2. Dargestellt ist in FIG 1 als Getriebe 4 eine Kniehebelmechanik. Diese Darstellung ist jedoch rein beispielhaft. Entscheidend ist, dass entsprechend der Darstellung von FIG 2 bzw. FIG 3 die Lage x des Antriebs 3 und die Lage x' des Maschinenelements 2 über eine nichtlineare Getriebefunktion i miteinander verknüpft sind. Die genaue funktionale Beziehung zwischen der Lage x des Antriebs 3 und der Lage x' des Maschinenelements 2 ist hierbei von untergeordneter Bedeutung. Entscheidend ist, dass die Beziehung nichtlinear ist.

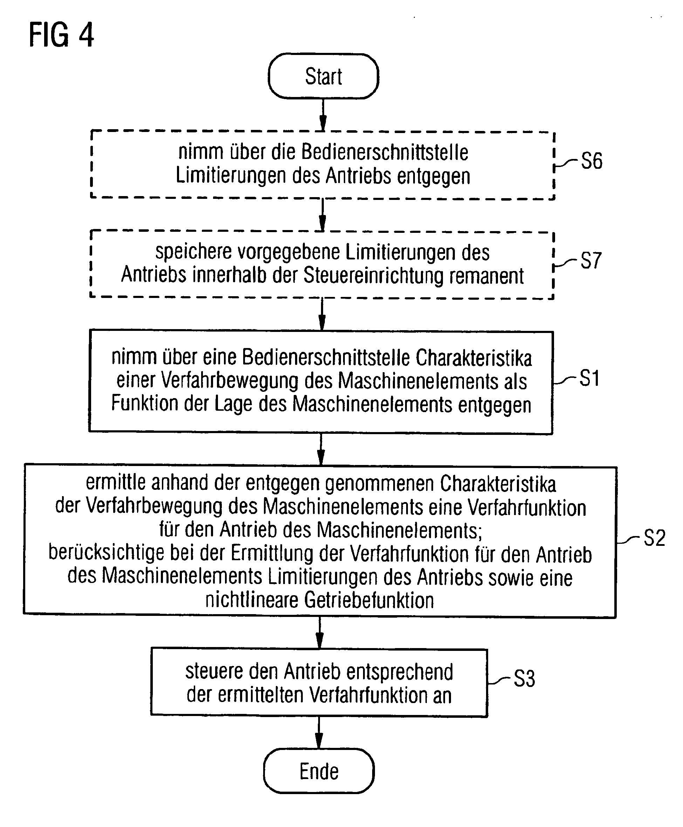

Die Maschine weist weiterhin eine Steuereinrichtung 5 auf. Die Steuereinrichtung 5 ist derart ausgebildet, dass sie die Maschine gemäß einem Betriebsverfahren steuert, das nachfolgend in Verbindung mit FIG 4 näher erläutert werden wird. In vielen Fällen ist die Steuereinrichtung 5 softwareprogrammiert. In diesem Fall ist das von der Steuereinrichtung 5 ausgeführte Betriebsverfahren durch ein Computerprogramm 6 bestimmt, das in einem Remanentspeicher 7 der Steuereinrichtung 5 gespeichert ist und von der Steuereinrichtung 5 im Betrieb ausgeführt wird. Der Remanentspeicher 7 kann beispielsweise als Flash-EPROM ausgebildet sein.

Das Computerprogramm 6 kann der Steuereinrichtung 5 auf verschiedene Weise zugeführt werden. Beispielsweise ist es möglich, dass das Computerprogramm 6 vorab in den Remanentspeicher 7 eingeschrieben wird und der Remanentspeicher 7 erst danach in die Steuereinrichtung 5 eingesetzt wird. Alternativ ist es möglich, das Computerprogramm 6 auf einem mobilen Datenträger 8 (beispielsweise einem USB-Memorystick oder einer SD-Speicherkarte) zu speichern. In diesem Fall muss die Steuereinrichtung 5 eine entsprechende Schnittstelle zum Verbinden des mobilen Datenträgers 8 mit der Steuereinrichtung 5 aufweisen. Wiederum alternativ ist es möglich, der Steuereinrichtung 5 das Computerprogramm 6 über eine Rechner-Rechner-Verbindung 9 zuzuführen, beispielsweise das World Wide Web.

Das Computerprogramm 6 umfasst Maschinenbefehle 10. Die Maschinenbefehle 10 sind von der Steuereinrichtung 5 unmittelbar abarbeitbar. Das Abarbeiten der Maschinenbefehle 10 durch die Steuereinrichtung 5 bewirkt, dass die Steuereinrichtung 5 das Betriebsverfahren von FIG 4 ausführt.

Gemäß FIG 4 nimmt die Steuereinrichtung 5 über eine Bedienerschnittstelle 11 Charakteristika einer Verfahrbewegung des Maschinenelements 2 entgegen. Entscheidend ist hierbei, dass die Vorgabe der Charakteristika der Verfahrbewegung des Maschinenelements 2 nicht als Funktion der Lage x des Antriebs 3, sondern als Funktion der Lage x' des Maschinenelements 2 vorgegeben wird. Beispielsweise können von einem Bediener 12 der Maschine über die Bedienerschnittstelle 11 Randbedingungen für die kontinuierliche Bewegung des Maschinenelements 2 mittels weniger, für den Betrieb der Maschine relevanter Parameter definiert werden. Beispielsweise können eine einzuhaltende Verfahrdauer t*, eine Anfangslage x1', eine Anfangsgeschwindigkeit v1', eine Endlage x2', eine Endgeschwindigkeit v2' usw. vorgegeben werden. Zudem können weitere diskrete Systemzustände definiert werden, die entweder angenommen werden sollen oder aber als Minimal- bzw. Maximalwerte definiert sind, also Limitierungen sind.

In einem Schritt S2 ermittelt die Steuereinrichtung 5 anhand der im Schritt S1 entgegen genommenen Charakteristika der Verfahrbewegung des Maschinenelements 2 eine Verfahrfunktion für den Antrieb 3 des Maschinenelements 2. Die Verfahrfunktion kann beispielsweise eine Funktion der Zeit sein, beispielsweise um eine Verfahrfunktion handeln, bei welcher die Verfahrgeschwindigkeit des Antriebs 3 als Funktion der Lage x des Antriebs 3 definiert ist.

Die Ermittlung der Verfahrfunktion für den Antrieb 3 des Maschinenelements 2 erfolgt im Rahmen des Schrittes S2 derart, dass der Antrieb 3 das Maschinenelement 2 entsprechend den vorgegebenen Charakteristika der Verfahrbewegung des Maschinenelements 2 verfährt. Die Steuereinrichtung 5 berücksichtigt bei der Ermittlung jedoch nicht nur die vorgegebenen Charakteristika der Verfahrbewegung des Maschinenelements 2, sondern zusätzlich Limitierungen des Antriebs 3 sowie die nichtlineare Getriebefunktion i des Getriebes 4.

Vorgehensweisen zur Ermittlung der Verfahrfunktion für den Antrieb 3 sind als solche bekannt. Beispielsweise kann die Vorgehensweise auf einer zeitoptimalen/geschwindigkeitsoptimalen/beschleunigungsoptimalen/ruckoptimalen usw. Bewegungsführung des Antriebs 3 basieren. Die errechnete Verfahrfunktion kann beispielsweise durch Splines vorbestimmter Ordnung geschwindigkeitsstetig oder beschleunigungsstetig beschrieben werden.

In einem Schritt S3 steuert die Steuereinrichtung 5 den Antrieb 3 entsprechend der im Schritt S2 ermittelten Verfahrfunktion an.

Die im Schritt S2 ermittelte Verfahrfunktion des Antriebs 3 wird in der Regel wiederholt ausgeführt. Beispielsweise kann alternierend jeweils eine Öffnungsbewegung und eine Schließbewegung des Maschinenelements 2 erfolgen. Die iterative Ausführung der in den Schritten S1 und S2 ermittelten Verfahrfunktion des Antriebs 3 wird als solche ebenso ausgeführt, wie dies im Stand der Technik allgemein üblich ist.

Zusätzlich zu den obenstehend erläuterten prinzipiellen Schritten S1 bis S3 können gemäß FIG 4 zusätzlich ein Schritt S6 und/oder ein Schritt S7 vorhanden sein. Das Vorhandensein der Schritte S6 und S7 ist jedoch nicht zwingend. Aus diesem Grund sind die Schritte S6 und S7 in FIG 4 nur gestrichelt dargestellt.

Im Schritt S6 nimmt die Steuereinrichtung 5 über die Bedienerschnittstelle 11 Limitierungen vmax, amax des Antriebs 3 entgegen, beispielsweise eine maximal mögliche Geschwindigkeit vmax, eine maximal mögliche Beschleunigung amax usw.. Im Schritt S7 werden einmal vorgegebene Limitierungen vmax, amax des Antriebs 3 innerhalb der Steuereinrichtung 5 remanent gespeichert.

Auch Kombinationen der Schritte S6 und S7 sind möglich, beispielsweise können die Limitierungen vmax, amax des Antriebs 3 im Schritt S6 vorgegeben und im Schritt S7 remanent gespeichert werden und sodann die Limitierungen vmax, amax beibehalten werden, bis die Limitierungen vmax, amax bei einer späteren Ausführung des Schrittes S6 neu vorgegeben werden.

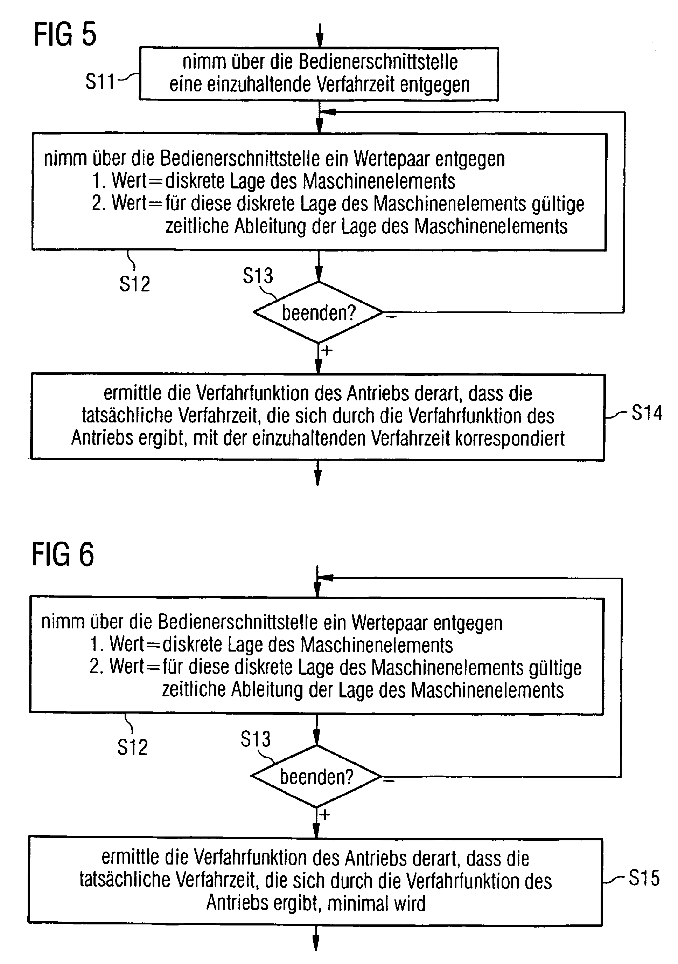

Die Schritte S1 und S2 können prinzipiell beliebig ausgestaltet sein. Beispielsweise können sie so ausgestaltet sein, wie dies nachfolgend in Verbindung mit FIG 5 näher erläutert wird.

Gemäß FIG 5 sind Schritte S11 bis S14 vorhanden. Die Schritte S11 bis S13 entsprechen zusammen einer möglichen Ausgestaltung des Schrittes S1. Der Schritt S14 entspricht einer möglichen Ausgestaltung des Schrittes S2.

Im Schritt S11 nimmt die Steuereinrichtung 5 über die Bedienerschnittstelle 11 eine einzuhaltende Verfahrzeit t* entgegen.

Im Schritt S12 nimmt die Steuereinrichtung 5 über die Bedienerschnittstelle 11 ein Wertepaar entgegen. Der erste Wert des Wertepaares ist eine diskrete Lage x' des Maschinenelements 2. Der zweite Wert des Wertepaares ist eine für diese Lage x' definierte zeitliche Ableitung der Lage x' des Maschinenelements 2. In der Regel handelt es sich um die erste zeitliche Ableitung, also die Verfahrgeschwindigkeit v' des Maschinenelements 2. Es ist jedoch alternativ möglich, eine höhere Ableitung (Beschleunigung oder Ruck usw.) vorzugeben.

Im Schritt S13 prüft die Steuereinrichtung 5, ob die Vorgabe der Wertepaare beendet ist. Wenn dies nicht der Fall ist, geht die Steuereinrichtung 5 zum Schritt S12 zurück, um ein weiteres Wertepaar entgegen zu nehmen. Anderenfalls geht sie zum Schritt S14 über.

Im Schritt S14 ermittelt die Steuereinrichtung 5 die Verfahrfunktion des Antriebs 3. Sie ermittelt die Verfahrfunktion des Antriebs 3 derart, dass die im Rahmen der - gegebenenfalls wiederholt ausgeführten - Abarbeitung des Schrittes S12 vorgegebenen Wertepaare berücksichtigt werden und die tatsächliche Verfahrzeit t, die sich durch die Verfahrfunktion des Antriebs 3 ergibt, mit der einzuhaltenden Verfahrzeit t* korrespondiert oder zumindest die einzuhaltende Verfahrzeit t* nicht übersteigt.

Alternativ zur Ausgestaltung gemäß FIG 5 ist eine Ausgestaltung gemäß FIG 6 möglich. Auch gemäß FIG 6 sind die Schritte S12 und S13 vorhanden. Zu den Schritten S12 und S13 sind daher keine weitergehenden Ausführungen mehr erforderlich. Ein Pendant zum Schritt S11 existiert im Rahmen der Ausgestaltung von FIG 6 nicht. Der Schritt S14 von FIG 5 ist durch einen Schritt S15 ersetzt. Im Schritt S15 ermittelt die Steuereinrichtung 5, prinzipiell analog zum Schritt S14 von FIG 5, die Verfahrfunktion des Antriebs 3. Die Ermittlung des Schrittes S15 erfolgt jedoch derart, dass die sich ergebende tatsächliche Verfahrzeit t minimal wird.

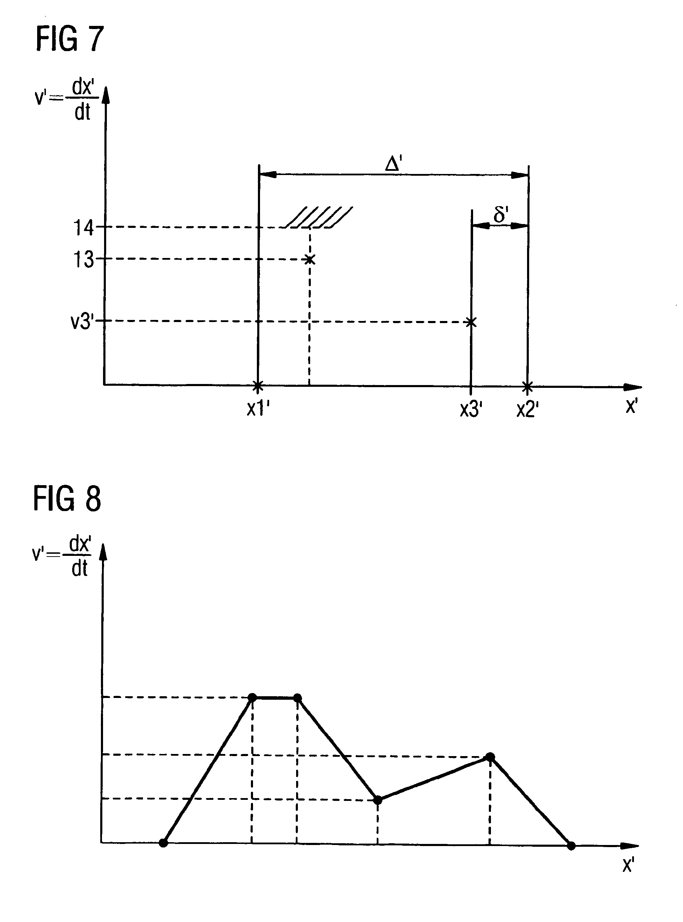

In FIG 7 ist eine bevorzugte Auswahl von Charakteristika der Verfahrbewegung des Maschinenelements 2 dargestellt. Entsprechend der Darstellung von FIG 7 werden der Steuereinrichtung 5 vom Bediener 12 folgende Werte vorgegeben:
- Die Ziellage x2', an der die Verfahrbewegung des Maschinenelements 2 beendet wird. Auf Grund des Umstands, dass an der Ziellage x2' die Verfahrbewegung des Maschinenelements 2 beendet wird, ergibt sich weiterhin, dass die korrespondierende erste zeitliche Ableitung der Verfahrbewegung des Maschinenelements 2, also die Verfahrgeschwindigkeit v' des Maschinenelements 2, an der Ziellage x2' Null ist.
- Eine Startlage x1', an der die Verfahrbewegung des Maschinenelements 2 begonnen wird. Auch für die Startlage x1' gilt, dass die korrespondierende Verfahrgeschwindigkeit v' des Maschinenelements 2 an dieser Lage x1' Null ist.
- Eine Zwischenlage x3', die zwischen der Startlage x1' und der Ziellage x2' liegt.
- Eine Zwischengeschwindigkeit v3', das heißt einen Wert für die erste zeitliche Ableitung der Lage x' des Maschinenelements 2. Die Zwischengeschwindigkeit v3' stellt einen an der Zwischenlage x3' einzuhaltenden Wert dar.

Die Ziellage x2' wird in der Regel als absoluter Wert vorgegeben. Die Startlage x1' kann ebenfalls als absoluter Wert vorgegeben werden. Alternativ kann sie indirekt dadurch vorgegeben werden, dass - in Koordinaten des Maschinenelements 2 - ein korrespondierender Gesamtverfahrweg Δ' vorgegeben wird.

In analoger Weise kann auch die Zwischenlage x3' als absoluter Wert vorgegeben werden. In der Regel erfolgt jedoch die Bestimmung der Zwischenlage x3' indirekt durch die Vorgabe eines entsprechenden Restverfahrweges δ' zur Ziellage x2'. Der Restverfahrweg δ' ist in der Regel erheblich kleiner als der Gesamtverfahrwerg Δ'.

In vielen Fällen ist die Vorgabe der oben genannten vier Werte x1', x2', x3', v3' hinreichend. Weitere Charakteristika der Verfahrbewegung des Maschinenelements 2 müssen nicht mehr vorgegeben werden. Lediglich die einzuhaltende Verfahrzeit t* kann gegebenenfalls mit vorgegeben werden. Prinzipiell ist es jedoch möglich, weitere Charakteristika mit vorzugeben. Beispielsweise kann für bestimmte weitere Lagen x' des Maschinenelements 2 jeweils eine einzuhaltende Bedingung mindestens einer zeitlichen Ableitung v' der Lage x' des Maschinenelements 2 vorgegeben werden. Beispielsweise können konkret anzunehmende Werte (in FIG 7 beispielhaft mit den Bezugszeichen 13 versehen) oder entsprechende Limitierungen (in FIG 7 rein beispielhaft mit den Bezugszeichen 14 versehen) vorgegeben werden.

Prinzipiell ist es auch möglich, andere als die obenstehend in Verbindung mit FIG 7 erläuterten Werte x1', x2', x3', v3' vorzugeben. In der Regel handelt es sich jedoch stets um zeitliche Ableitungen der Lage x' des Maschinenelements 2, die an einer jeweiligen Lage x' des Maschinenelements 2 entweder angenommen werden sollen oder aber nicht überschritten oder nicht unterschritten werden dürfen.

Weiterhin ist es möglich, die Verfahrbewegung des Maschinenelements 2 nicht nur punktuell für diskrete Lagen x' des Maschinenelements 2 vorzugeben, sondern die Verfahrbewegung des Maschinenelements 2 funktional über einen kontinuierlichen Bereich zu definieren. Beispielsweise kann entsprechend FIG 8 eine Anzahl an Lagen x' des Maschinenelements 2 vorgegeben werden. Zwischen je zwei unmittelbar benachbarten Lagen x' des Maschinenelements 2 wird ein funktionaler Verlauf einer zeitlichen Ableitung der Lage x' des Maschinenelements 2 (insbesondere die Geschwindigkeit v' oder die Beschleunigung) vorgegeben. Die Vorgabe kann insbesondere in Form eines Polynoms (beispielsweise linear oder parabolisch) erfolgen.

Die vorliegende Erfindung weist viele Vorteile auf. Insbesondere ist es möglich, die Charakteristika der Verfahrbewegung des Maschinenelements 2 in der Domäne des Maschinenelements 2 selbst vorzugeben, also in der technologisch relevanten Domäne. Dadurch ergibt sich eine erheblich verbesserte und leichter erzielbare Definition der Verfahrbewegung des Maschinenelements 2. Ein im Stand der Technik erforderlicher langwieriger Iterationsprozess kann entfallen. Durch die erfindungsgemäße Vorgehensweise ergibt sich daher zum einen eine erhebliche Zeitersparnis bei der korrekten Definition der Verfahrbewegung des Maschinenelements 2 als auch in der Regel eine erhebliche Zeitersparnis beim Bewegen des Maschinenelements 2. Weiterhin muss der Bediener 12 nicht mehr die gesamte Verfahrbewegung (als Funktion der Lage x des Antriebs 3) definieren, sondern kann sich auf diskrete Punkte innerhalb der Verfahrbewegung des Maschinenelements 2 (als Funktion der Lage x' des Maschinenelements 2) beschränken. Weiterhin ist es auf Grund der erfindungsgemäßen Vorgehensweise möglich, dass die Verfahrfunktion des Antriebs 3 einen prinzipiell beliebigen Verlauf annimmt, wenn sie nur die Limitierungen des Antriebs 3 einhält.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Betriebsverfahren für eine Steuereinrichtung (5) einer Maschine, wobei die Steuereinrichtung (5)
- über eine Bedienerschnittstelle (11) Charakteristika einer Verfahrbewegung eines Maschinenelements (2) der Maschine als Funktion der Lage (x') des Maschinenelements (2) entgegen nimmt,
- anhand der Charakteristika der Verfahrbewegung des Maschinenelements (2) in Verbindung mit Limitierungen (vmax, amax) eines das Maschinenelement (2) über ein nichtlineares Getriebe (4) verstellenden Antriebs (3) und einer korrespondierenden nichtlinearen Getriebefunktion (i) des Getriebes (4) eine Verfahrfunktion für den Antrieb (3) des Maschinenelements (2) ermittelt, so dass der Antrieb (3) das Maschinenelement (2) entsprechend den Charakteristika der Verfahrbewegung des Maschinenelements (2) verfährt, und
- den Antrieb (3) entsprechend der ermittelten Verfahrfunktion ansteuert.

2. Betriebsverfahren nach Anspruch 1,
**dadurch gekennzeichnet,**
**dass** die Steuereinrichtung (5) die Limitierungen (vmax, amax) des Antriebs (3) über die Bedienerschnittstelle (11) entgegen nimmt.

3. Betriebsverfahren nach Anspruch 1 oder 2,
**dadurch gekennzeichnet,**
**dass** die Limitierungen (vmax, amax) des Antriebs (3) innerhalb der Steuereinrichtung (5) remanent gespeichert sind.

4. Betriebsverfahren nach Anspruch 1, 2 oder 3,
**dadurch gekennzeichnet,**
**dass** die Charakteristika der Verfahrbewegung des Maschinenelements (2) für diskrete Lagen (x1', x2', x3') des Maschinenelements (2) an diesen Lagen (x1', x2', x3') einzuhaltende Bedingungen mindestens einer zeitlichen Ableitung (v') der Lage (x') des Maschinenelements (2) umfassen.

5. Betriebsverfahren nach Anspruch 4,
**dadurch gekennzeichnet,**
**dass** die einzuhaltenden Bedingungen zumindest teilweise Limitierungen (14) der zeitlichen Ableitung (v') der Lage (x') des Maschinenelements (2) sind.

6. Betriebsverfahren nach Anspruch 4 oder 5,
**dadurch gekennzeichnet,**
**dass** die einzuhaltenden Bedingungen zumindest teilweise anzunehmende Werte (13, v3') der zeitlichen Ableitung (v') der Lage (x') des Maschinenelements (2) sind.

7. Betriebsverfahren nach Anspruch 4, 5 oder 6,
**dadurch gekennzeichnet,**
**dass** die Charakteristika der Verfahrbewegung des Maschinenelements (2)
- eine Startlage (x1'), an der die Verfahrbewegung des Maschinenelements (2) begonnen wird,
- eine Ziellage (x2'), an der die Verfahrbewegung des Maschinenelements (2) beendet wird,
- eine Zwischenlage (x3') zwischen der Startlage (x1') und der Ziellage (x2') sowie
- einen an der Zwischenlage (x3') einzuhaltenden Wert (v3') für die erste zeitliche Ableitung (v') der Lage (x') des Maschinenelements (2)
umfassen.

8. Betriebsverfahren nach Anspruch 7,
**dadurch gekennzeichnet,**
**dass** die Charakteristika der Verfahrbewegung des Maschinenelements (2) entweder keine weiteren Beschränkungen oder nur eine für das Verfahren des Maschinenelements (2) einzuhaltende Verfahrzeit (t*) umfassen.

9. Betriebsverfahren nach einem der Ansprüche 1 bis 7,
**dadurch gekennzeichnet,**
**dass** die einzuhaltenden Bedingungen eine für das Verfahren des Maschinenelements (2) einzuhaltende Verfahrzeit (t*) umfassen.

10. Betriebsverfahren nach einem der Ansprüche 1 bis 7,
**dadurch gekennzeichnet,**
**dass** die Steuereinrichtung (5) die Verfahrfunktion für den Antrieb (3) des Maschinenelements (2) derart ermittelt, dass der Antrieb (3) das Maschinenelement (2) in einer möglichst kurzen Verfahrzeit (t) verfährt.

11. Computerprogramm für eine Steuereinrichtung (5) einer Maschine, wobei das Computerprogramm Maschinenbefehle (10) umfasst, die von der Steuereinrichtung (5) unmittelbar abarbeitbar sind, wobei die Abarbeitung der Maschinenbefehle (10) durch die Steuereinrichtung (5) bewirkt, dass die Steuereinrichtung (5) ein Betriebsverfahren nach einem der obigen Ansprüche ausführt.

12. Computerprogramm nach Anspruch 11,
**dadurch gekennzeichnet,**
**dass** es auf einem mobilen Datenträger (8) gespeichert ist.

13. Computerprogramm nach Anspruch 11,
**dadurch gekennzeichnet,**
**dass** es in der Steuereinrichtung (5) gespeichert ist.

14. Steuereinrichtung einer Maschine, wobei die Steuereinrichtung derart ausgebildet ist, dass sie im Betrieb ein Betriebsverfahren nach einem der Ansprüche 1 bis 10 ausführt.

## Claims

1. Operating method for a control device (5) of a machine, wherein the control device (5)
- receives, via a user interface (11), characteristics of a displacement movement of a machine element (2) of the machine as a function of the position (x') of the machine element (2),
- determines a displacement function for the drive (3) of the machine element (2) on the basis of the characteristics of the displacement movement of the machine element (2) in conjunction with limits (vmax, amax) of a drive (3) adjusting the machine element (2) by way of a non-linear gearing mechanism (4) and a corresponding non-linear gearing function (i) of the gearing mechanism (4) such that the drive (3) displaces the machine element (2) in accordance with the characteristics of the displacement movement of the machine element (2), and
- actuates the drive (3) in accordance with the determined displacement function.

2. Operating method according to claim 1,
**characterised in that**
the control device (5) receives the limits (vmax, amax) of the drive (3) via the user interface (11).

3. Operating method according to claim 1 or 2,
**characterised in that**
the limits (vmax, amax) of the drive (3) are stored in nonvolatile memory inside the control device (5).

4. Operating method according to claim 1, 2 or 3,
**characterised in that**
the characteristics of the displacement movement of the machine element (2) include, for discrete positions (x1', x2', x3') of the machine element (2), conditions of at least one time derivative (v') of the position (x') of the machine element (2) that are to be complied with at said positions (x1', x2', x3').

5. Operating method according to claim 4,
**characterised in that**
at least some of the conditions that are to be complied with are limits (14) of the time derivative (v') of the position (x') of the machine element (2).

6. Operating method according to claim 4 or 5,
**characterised in that**
at least some of the conditions that are to be complied with are values (13, v3') of the time derivative (v') of the position (x') of the machine element (2) that are to be assumed.

7. Operating method according to claim 4, 5 or 6,
**characterised in that**
the characteristics of the displacement movement of the machine element (2) include
- a start position (x1') at which the displacement movement of the machine element (2) is initiated,
- a destination position (x2') at which the displacement movement of the machine element (2) is terminated,
- an intermediate position (x3') between the start position (x1') and the destination position (x2'), and
- a value (v3'), to be maintained at the intermediate position (x3'), for the first time derivative (v') of the position (x') of the machine element (2).

8. Operating method according to claim 7,
**characterised in that**
the characteristics of the displacement movement of the machine element (2) include either no further restrictions or only a displacement time (t*) that is to be maintained for the displacement of the machine element (2).

9. Operating method according to one of claims 1 to 7,
**characterised in that**
the conditions that are to be complied with include a displacement time (t*) that is to be complied with for the displacement of the machine element (2).

10. Operating method according to one of claims 1 to 7,
**characterised in that**
the control device (5) determines the displacement function for the drive (3) of the machine element (2) in such a way that the drive (3) displaces the machine element (2) in the shortest possible displacement time (t).

11. Computer program for a control device (5) of a machine, wherein the computer program comprises machine instructions (10) which can be processed directly by the control device (5), wherein the processing of the machine instructions (10) by the control device (5) causes the control device (5) to perform an operating method according to one of the above claims.

12. Computer program according to claim 11,
**characterised in that**
it is stored on a mobile data medium (8).

13. Computer program according to claim 11,
**characterised in that**
it is stored in the control device (5).

14. Control device of a machine, wherein the control device is embodied in such a way that during operation it performs an operating method according to one of the claims 1 to 10.

## Revendications

1. Procédé pour faire fonctionner un dispositif (5) de commande d'une machine, dans lequel le dispositif (5) de commande
- reçoit par une interface ( 11 ) d'opérateur des caractéristiques d'un mouvement de déplacement d'un élément ( 2 ) de la machine en fonction de la position ( x' ) de l'élément ( 2 ) de la machine,
- au moyen des caractéristiques du mouvement de déplacement de l'élément ( 2 ) de la machine, détermine, en liaison avec des limitations ( vmax, amax ) d'un entraînement ( 3 ) déplaçant l'élément ( 2 ) de la machine par une transmission ( 4 ) non linéaire et une fonction ( i ) non linéaire correspondante de l'entraînement (4), une fonction de déplacement pour l'entraînement (3) de l'élément ( 2 ) de la machine, de sorte que l'entraînement ( 3 ) déplace l'élément ( 2 ) de la machine en fonction des caractéristiques du mouvement de déplacement de l'élément ( 2 ) de la machine, et
- commande l'entraînement ( 3 ) conformément à la fonction de déplacement déterminée.

2. Procédé suivant la revendication 1,
**caractérisé**
**en ce que** le dispositif (5) de commande reçoit les limitations (vmax, amax) de l'entraînement (3) par l'interface ( 11 ) de l'opérateur.

3. Procédé suivant la revendication 1 ou 2,
**caractérisé**
**en ce que** les limitations ( vmax, amax ) de l'entraînement ( 3 ) sont mémorisées de manière rémanente à l'intérieur du dispositif ( 5 ) de commande.

4. Procédé suivant la revendication 1, 2 ou 3,
**caractérisé**
**en ce que** les caractéristiques du mouvement de déplacement de l'élément ( 2 ) de la machine comprennent, pour des positions ( x1', x2', x3' ) discrètes de l'élément ( 2 ) de la machine, des conditions à respecter, en ces positions (x1', x2', x3'), d'au moins une dérivée (v') dans le temps de la position ( x' ) de l'élément ( 2 ) de la machine.

5. Procédé suivant la revendication 4,
**caractérisé**
**en ce que** les conditions à respecter sont, au moins en partie, des limitations ( 4 ) de la dérivée ( v' ) en fonction du temps de la position ( x' ) de l'élément ( 2 ) de la machine.

6. Procédé suivant la revendication 4 ou 5,
**caractérisé**
**en ce que** les conditions à respecter sont, au moins en partie, des valeurs ( 13, v3' ) à prendre de la dérivée ( v' ) en fonction du temps de la position ( x' ) de l'élément ( 2 ) de la machine.

7. Procédé suivant la revendication 4,5 ou 6,
**caractérisé**
**en ce que** les caractéristiques du mouvement de déplacement de l'élément ( 2 ) de la machine comprennent
- une position ( x1' ) de démarrage, à laquelle le mouvement de déplacement de l'élément ( 2 ) de la machine est commencé,
- une position ( x2' ) visée, à laquelle le mouvement de déplacement de l'élément ( 2 ) de la machine est achevé,
- une position ( x3' ) intermédiaire entre la position ( x1' ) de démarrage et la position ( x2' ) visée, ainsi que
- une valeur ( v3' ), à respecter, à la position ( x3' ) intermédiaire, de la dérivée ( v' ) première en fonction du temps de la position ( x' ) de l'élément ( 2 ) de la machine.

8. Procédé suivant la revendication 7,
**caractérisé**
**en ce que** les caractéristiques du mouvement de déplacement de l'élément (2) de la machine ne comprennent pas d'autres limitations ou ne comprennent qu'un temps (t*) de déplacement à respecter pour le déplacement de l'élément ( 2 ) de la machine.

9. Procédé suivant l'une des revendications 1 à 7,
**caractérisé**
**en ce que** les conditions à respecter comprennent un temps ( t* ) de déplacement à respecter pour le déplacement de l'élément ( 2 ) de la machine.

10. Procédé suivant l'une des revendications 1 à 7,
**caractérisé**
**en ce que** le dispositif (5) de commande détermine la fonction de déplacement pour l'entraînement ( 3 ) de l'élément ( 2 ) de la machine, de manière à ce que l'entraînement ( 3 ) déplace l'élément ( 2 ) de la machine dans un temps ( t ) de déplacement le plus court possible.

11. Programme informatique pour un dispositif ( 5 ) de commande d'une machine, le programme informatique comprenant des instructions ( 10 ) machine qui peuvent être élaborées directement par le dispositif ( 5 ) de commande, l'élaboration des instructions ( 10 ) machine par le dispositif (5) de commande faisant que le dispositif ( 5 ) de commande exécute un procédé suivant l'une des revendications précédentes.

12. Programme informatique suivant la revendication 11,
**caractérisé**
**en ce qu'**il est mémorisé sur un support (8) de données mobile.

13. Programme informatique suivant la revendication 11,
**caractérisé**
**en ce qu'**il est mémorisé dans le dispositif ( 5 ) de commande.

14. Dispositif de commande d'une machine, le dispositif de commande étant tel qu'il est exécuté en fonctionnement un procédé suivant l'une des revendications 1 à 10.
